# EUROPÄISCHE PATENTANMELDUNG

(11) **EP 3 588 516 A1**
(43) Veröffentlichungstag der Anmeldung: **01.01.2020**
(21) Anmeldenummer: 19174914.2
(22) Anmeldetag: 16.05.2019
(51) Int. Cl.: H01B 5/00, A01K 3/00, E04H 17/04, H01B 5/10, H01B 5/16

(54) **ELEKTRISCHER ZAUNLEITER, ELEKTROZAUNVORRICHTUNG, VERFAHREN ZUR HERSTELLUNG UND ZUM BETRIEB DERSELBEN**

(30) Priorität: 23.06.2018 DE 202018002952 U; 01.10.2018 DE 202018004553 U
(71) Anmelder: Seemann, Berthold W., 21271 Hanstedt (DE)
(72) Erfinder: Seemann, Berthold W., 21271 Hanstedt (DE)
(74) Vertreter: Andresen, Heiko

(57) **Zusammenfassung**

Die Erfindung betrifft einen elektrischen Zaunleiter mit mindestens einem sich in einer Längsrichtung des elektrischen Zaunleiters erstreckenden elektrisch nichtleitenden Trägerstrang und mindestens einem sich in der Längsrichtung des elektrischen Zaunleiters erstreckenden elektrisch leitenden Leiterstrang, welcher mit dem elektrisch nichtleitenden Trägerstrang verbunden ist, wobei der elektrisch leitende Leiterstrang entlang der Längsrichtung des elektrischen Zaunleiters zumindest abschnittsweise eine Ummantelung mit einem Isolierstoff aufweist. Die Erfindung betrifft weiterhin ein zugehöriges Herstellungsverfahren sowie eine zugehörige Elektrozaunvorrichtung und ein Verfahren zum Betrieb derselben.

## Beschreibung

### Verweis auf frühere Anmeldungen

Diese Anmeldung beansprucht die Priorität der deutschen Gebrauchsmusteranmeldungen Nr. 20 2018 002 952.1 und Nr. 20 2018 004 553.5, deren Offenbarungsgehalt hiermit durch Rückbezug vollumfänglich einbezogen wird.

### Gebiet der Erfindung

Die Erfindung liegt auf dem Gebiet elektrisch betriebener Zäune, bei deren Berührung ein elektrischer Schlag ausgeteilt wird. Solche Elektrozäune werden insbesondere im Bereich der Hütetechnik zum Einhegen von Weiden oder Tiergehegen eingesetzt. Weitere typische Anwendungen liegen im Bereich des Ernteschutzes bzw. der Wildabwehr.

### Hintergrund der Erfindung

Für die moderne Weidehaltung von Nutztieren auf begrenzten Flächen werden in der Regel elektrische Weidezaunanlagen eingesetzt, welche mithilfe eines Weidezaungerätes mit Spannung beaufschlagt werden, um die Tiere durch die abschreckende Wirkung von Stromschlägen vom Zaun fernzuhalten bzw. am Ausbruch zu hindern. Neben dieser Hütewirkung können solche Elektrozäune gleichermaßen unerwünschte Eindringlinge wie z. B. Wölfe davon abhalten, von außerhalb der Einzäunung auf die Weide zu gelangen. Auch zum Schutz von landwirtschaftlichen Nutzflächen kommen verstärkt Elektrozäune für die Wildabwehr zum Einsatz.

Ein typischer Aufbau eines Elektrozauns umfasst mehrere im Boden verankerten Zaunpfähle bzw. -pfosten, zwischen denen ein oder mehrere elektrische Weidezaunleiter aufgespannt sind. Eine Hochspannungseinheit, welche über den Pluspol mit den elektrischen Weidezaunleitern elektrisch leitend verbunden und über den Minuspol geerdet ist, gibt in zeitlicher Folge Hochspannungsimpulse in einer vorbestimmten Höhe und mit einem vorbestimmten Energiegehalt an die elektrischen Weidezaunleiter ab.

Je nach Tierart bzw. Einsatzzweck können z. B. die Anzahl, die Anordnung und die Ausführungsform der verwendeten elektrischen Weidezaunleiter variiert werden. In der Offenlegungsschrift DE 197 03 390 sind beispielsweise Weidezaunlitzen, Weidezaunbänder und Weidezaunseile beschrieben, jeweils bestehend aus nichtleitenden Fasern und einem oder mehreren leitenden Drähten, welche in die nichtleitenden Fasern eingeflochten, eingewirkt, eingewebt, umwickelt oder in sonstiger Weise eingebracht sind. Auch die beaufschlagte Hochspannung und die Impulsenergie werden in der Regel entsprechend der Tierart bzw. dem Einsatzzweck ausgewählt.

Problematisch ist, dass im Bereich der Bespannung des Zauns aufwachsende Pflanzen wie z. B. Gräser oder Gesträuch die Weidezaunleiter kontaktieren und dadurch eine unerwünschte elektrische Nebenerdung bewirken können. Auf diese Weise kann ein erheblicher Teil der kontinuierlich eingespeisten Hochspannungsenergie permanent über den elektrischen Nebenschluss der Pflanzen abgeleitet werden. Dieser ständige Energieverlust kann nicht nur die Betriebskosten herkömmlicher Elektrozaunanlagen erheblich erhöhen, sondern auch die Spannung und die Impulsenergie des Elektrozauns soweit reduzieren, dass die abschreckende Wirkung aufgrund einer entsprechenden Abschwächung des Stromschlags nicht mehr gewährleistet ist.

Aus DE 23 16 400 A ist ein Elektrozaun bekannt, bei dem die aus Metallbändern bestehenden elektrischen Leiter mit Ausnahme ihrer Kantenflächen eine elektrisch isolierende Beschichtung aufweisen, um die Gefahr unerwünschter Erdung durch Pflanzenbewuchs zu verringern. In DE 20 2018 000 156 U1 wird ein gegen Pflanzenbewuchs unempfindlicher elektrischer Weidezaun offenbart, dessen elektrische Leiter durch ein Flächenelement mit vektoriell wirkendem elektrischem Widerstand so abgedeckt sind, dass nur dann ein elektrischer Kontakt zustande kommt, wenn eine ausreichende Kraft auf das Flächenelement ausgeübt wird. Diese bekannten elektrischen Leiter weisen jedoch den Nachteil auf, dass sie zum einen nur mit erhöhtem Aufwand herstellbar sind und sich zum anderen nur für bestimmte Weidezaunleiter wie z. B. Weidezaunbänder, nicht aber ohne Weiteres für Weidezaunlitzen oder -seile eignen.

Es ist daher eine Aufgabe der vorliegenden Erfindung, einen verbesserten elektrischen Zaunleiter und ein dazugehöriges Herstellungsverfahren bzw. eine verbesserte Elektrozaunvorrichtung und ein Verfahren zu deren Betrieb anzugeben.

Diese Aufgabe wird durch einen elektrischen Zaunleiter mit den Merkmalen von Anspruch 1 und durch ein Verfahren zur Herstellung eines elektrischen Zaunleiters gemäß Anspruch 9 gelöst. Weiterhin wird diese Aufgabe durch eine Elektrozaunvorrichtung mit den Merkmalen von Anspruch 10 und ein Verfahren zum Betrieb einer Elektrozaunvorrichtung nach Anspruch 13 gelöst. Bevorzugte und vorteilhafte Ausgestaltungen der Erfindung ergeben sich aus weiteren Ansprüchen und der nachstehenden Beschreibung.

### Beschreibung der Erfindung

Es wird ein elektrischer Zaunleiter angegeben, wobei es sich beispielsweise um einen elektrischen Weide- oder Gehegezaunleiter handeln kann. Der elektrische Zaunleiter umfasst mindestens einen sich in einer Längsrichtung des elektrischen Zaunleiters erstreckenden elektrisch nichtleitenden Trägerstrang und mindestens einen sich in der Längsrichtung des elektrischen Zaunleiters erstreckenden elektrisch leitenden Leiterstrang, welcher mit dem elektrisch nichtleitenden Trägerstrang verbunden ist. Dabei können der elektrisch nichtleitende Trägerstrang und der elektrisch leitende Leiterstrang entlang der Längsrichtung des elektrischen Zaunleiters beispielsweise miteinander verdrillt bzw. verseilt, umwickelt, verflochten, verwoben oder auch in sonstiger Weise miteinander verbunden sein. Den erfindungsgemäßen elektrischen Zaunleiter zeichnet dabei aus, dass der elektrisch leitende Leiterstrang entlang der Längsrichtung des elektrischen Zaunleiters zumindest abschnittsweise eine Ummantelung mit einem Isolierstoff aufweist. Hierbei ist "Ummantelung" gemäß dem üblichen fachmännischen Begriffsverständnis so zu verstehen, dass der Leiterstrang außen vollständig von dem Isolierstoff umschlossen bzw. umhüllt ist. Nachfolgend wird die Ummantelung mit dem Isolierstoff auch vereinfachend als "elektrische Isolierung" bzw. "Isolierung" bezeichnet.

Bisher ist man in der Fachwelt davon ausgegangen, dass für die zuverlässige Funktion eines Elektrozauns ein direkter elektrischer Kontakt zwischen dem Körper eines Tieres und dem spannungsführenden Teil eines elektrischen Zaunleiters zwingend erforderlich ist. Dementsprechend hat sich der einschlägige Stand der Technik bis heute ausnahmslos in Richtung solcher elektrischer Zaunleiter entwickelt, die bei Berührung eine unmittelbare elektrische Kontaktierung des spannungsführenden Teils erlauben.

Die hier vorgeschlagene Lösung geht indessen einen völlig neuen Weg, indem erstmals elektrisch isolierte Leiterstränge in einem elektrischen Zaunleiter verwendet werden, sodass bei Berührung des erfindungsgemäßen Zaunleiters keine direkte bzw. unmittelbare elektrische Kontaktierung des spannungsführenden Teils stattfinden kann. Dabei beruht die Erfindung auf der Erkenntnis, dass einzelne der in der elektrischen Isolierung des Zaunleiters in geringer Anzahl vorhandenen Leitungselektronen durch hohe elektrische Feldstärken herausgeschlagen und beschleunigt werden können, um in kurzer Zeit eine große Anzahl von weiteren Ladungsträgern freizusetzen. Sofern es dabei die in dem Stromkreis vorhandenen Widerstände erlauben, entwickelt sich bei Erreichen einer kritischen Spannung, der sogenannten Durchschlagspannung, durch Stoßionisation eine Lawine von Ladungsträgern, mit der Folge, dass der durch die Isolierung fließende Strom schlagartig zunimmt, bis ein sogenannter elektrischer Durchschlag eintritt. Das heißt, es bildet sich für eine kurze Zeit in der Isolierung ein elektrisch leitender Kanal, über den sich ein beaufschlagter Hochspannungsimpuls entladen kann. Dadurch ist es überraschenderweise möglich, dass mit dem erfindungsgemäßen Zaunleiter trotz oder gerade wegen der elektrischen Isolierung des Leiterstrangs eine besonders vorteilhafte Hütewirkung erzielt wird. Diesbezüglich wird auch auf die nachfolgende Beschreibung und die Ausführungsbeispiele verwiesen.

Insbesondere hat der Erfinder als Vorteil erkannt, dass die Durchschlagsentwicklung in der Isolierung des Leiterstrangs maßgeblich durch den Entladungsstrom (nachfolgend auch als "Ionisierungsstrom" bezeichnet) bestimmt wird, der in dem Isolierstoff unter dem Einfluss des elektrischen Feldes fließen kann. Bei einer ausreichenden Höhe des Ionisierungsstroms, welche insbesondere durch einen an die Isolierung anliegenden geringen Vorwiderstand begünstigt wird, kann die Ladungsträgerlawine die Isolierung vollständig durchlaufen und gleichzeitig auf das erforderliche Ausmaß anwachsen, welches schließlich den vollständigen elektrischen Durchschlag der Isolierung bewirkt. Ist der Ionisierungsstrom dagegen z. B. durch einen sehr hohen Vorwiderstand begrenzt, wird die für die Ausbildung bzw. Verstärkung der Ladungsträgerlawine kritische Ausbeute an freien Leistungsträgern im Isolierstoff nicht erreicht. Ein elektrischer Durchschlag kann in diesem Fall nicht erfolgen, stattdessen stellt sich ein stabiler Entladungszustand ohne wesentlichen Stromfluss ein. Dies hat den wesentlichen Vorteil, dass der Eintritt eines elektrischen Durchschlags bei einem erfindungsgemäßen Zaunleiter insbesondere von der elektrischen Leitfähigkeit desjenigen Objektes abhängt, welches bei Berührung des Zaunleiters eine Verbindung zwischen dem isolierten Leiterstrang und dem Erdpotential ausbildet.

In diesem Zusammenhang konnte der Erfinder weiterhin feststellen, dass Pflanzen bereits in geringer Höhe über dem Erdboden einen elektrischen Gleichstromwiderstand von mehreren 100 Kiloohm aufweisen. Der durch Pflanzenkontakt an den isolierten Leiterstrang anliegende Vorwiderstand ist damit nach Erkenntnis des Erfinders im Regelfall so hoch, dass unter dem Einfluss des elektrischen Feldes kein ausreichender Ionisierungsstrom durch den Isolierstoff bzw. die Isolierung fließen kann, um einen elektrischen Durchschlag zu bewirken. Demzufolge bleibt der Leiterstrang bei Pflanzenkontakt elektrisch isoliert und es fließt kein die Funktion des erfindungsgemäßen Elektrozauns beeinträchtigender Strom über die Pflanze ab.

Im Gegensatz hierzu liegt der Widerstand eines Tierkörpers typischerweise in einem Bereich von 250 Ohm bis 700 Ohm. Der durch Tierkontakt an den isolierten Leiterstrang anliegende Vorwiderstand ist damit so gering, dass ein für die Stoßionisation und die Ausbildung einer Ladungsträgerlawine ausreichender bzw. förderlicher Ionisierungsstrom durch das Innere der Isolierung fließen kann und schließlich zum vollständigen elektrischen Durchschlag führt. Infolge des nunmehr kurzzeitig geschlossenen Hochspannungsstromkreises fließt ein hoher Strom und das den elektrischen Leiter kontaktierende Tier erfährt einen einmaligen Hochspannungsimpuls.

Auf diese Weise differenziert der erfindungsgemäße elektrische Zaunleiter im Prinzip von selbst zwischen einer Berührung durch den Körper eines Tieres und einer Berührung durch eine Pflanze. Dadurch werden unerwünschte elektrische Nebenschlüsse des Zaunleiters aufgrund von Pflanzenkontakt wirksam vermieden. Im Gegensatz zu herkömmlichen Zaunleitern werden somit selbst bei starkem pflanzlichem Bewuchs weder die Hütewirkung noch der Strombedarf bzw. der Stromverbrauch des erfindungsgemäßen Zaunleiters wesentlich beeinträchtigt.

Aus den vorstehenden Betrachtungen geht hervor, dass der elektrische Leiterstrang insbesondere in denjenigen Abschnitten mit dem Isolierstoff ummantelt sein sollte, in denen neben einem Tierkontakt auch ein Bewuchs des elektrischen Zaunleiters mit Pflanzen zu erwarten ist. Vorzugsweise weisen entlang der Längsrichtung des elektrischen Zaunleiters mindestens 10%, mindestens 20%, mindestens 30%, mindestens 40%, mindestens 50%, mindestens 60%, mindestens 70%, mindestens 80%, mindestens 90% oder mindestens 95% des elektrisch leitenden Leiterstrangs die Ummantelung mit dem Isolierstoff auf. Es ist auch möglich, dass der elektrisch leitende Leiterstrang im Wesentlichen vollständig, d. h. zu 99% oder mehr, mit dem Isolierstoff ummantelt ist. Beispielsweise können lediglich einzelne, für eine direkte elektrische Kontaktierung vorgesehene Bereiche des Leiterstrangs (z. B. für elektrische Anschlüsse oder Verbindungen) von der Ummantelung ausgenommen sein.

In einer bevorzugten Ausgestaltung ist die Ummantelung mit dem Isolierstoff als eine auf einer Außenoberfläche des elektrisch leitenden Leiterstrangs angeordnete Beschichtung mit einem Feststoffisolator ausgebildet. Derartige Beschichtungen haben sich für die Erfindung als besonders zweckmäßig erwiesen, um einerseits eine sichere Isolationswirkung gegenüber Pflanzenkontakt zu erzielen und andererseits einen zuverlässigen elektrischen Durchschlag bei Kontakt des Zaunleiter bzw. des Leiterstrangs mit einem Tierkörper zu gewährleisten. Entsprechende Beschichtungen sind dem Fachmann bekannt oder können auf der Grundlage der vorliegenden Offenbarung ohne Weiteres bestimmt werden. Geeignet ist z. B. eine den Feststoffisolator enthaltende bzw. aus dem Feststoffisolator bestehende Lackschicht, mit welcher die Außenoberfläche des elektrisch leitende Leiterstrangs entlang der Längsrichtung des Zaunleiters überzogen ist. Solche Lacküberzüge bzw. Lackfilme sind besonders geeignet, um die Außenoberfläche des elektrisch leitenden Leiterstrangs auch über sehr lange Strecken zuverlässig und effizient mit dem Feststoffisolator zu beschichten. Es versteht sich, dass die Beschichtung auch mehrere übereinander bzw. aufeinander angeordnete Schichten, z. B. eine Zwei- oder Mehrschichtlackierung, mit jeweils gleichen oder unterschiedlichen Feststoffisolatoren umfassen oder aus diesen bestehen kann, um eine stromundurchlässige und widerstandsfähige elektrische Isolationsschicht zu bilden.

Geeignete Schichtdicken der Beschichtung hängen insbesondere von dem Isolationsmaterial und dessen molekularen Eigenschaften ab, welche für die Höhe der Durchschlagspannung ausschlaggebend sein können. Vorzugsweise weist die Ummantelung mit dem Isolierstoff bzw. die Beschichtung mit dem Feststoffisolator eine Schichtdicke von mindestens 0,005 Millimetern, vorzugsweise mindestens 0,075 Millimetern, besonders bevorzugt mindestens 0,01 Millimetern auf. Alternativ oder zusätzlich kann die Ummantelung mit dem Isolierstoff bzw. die Beschichtung mit dem Feststoffisolator eine Schichtdicke von höchstens 0,2 Millimetern, vorzugsweise höchstens 0,15 Millimetern, besonders bevorzugt höchstens 0,1 Millimetern aufweisen. Innerhalb dieser bevorzugten Parameter ergeben sich besonders vorteilhafte Kombinationen von ausreichend hoher mechanischer Belastbarkeit und sicherer Isolationswirkung gegenüber Pflanzenbewuchs bei gleichzeitig zuverlässigem elektrischem Durchschlag bei Kontakt mit einem Tierkörper. Besonders bevorzugte Schichtdicken liegen im Bereich von 0,01 Millimetern bis 0,015 Millimetern, beispielsweise bei etwa 0,012 Millimetern.

Als Isolierstoff bzw. Feststoffisolator kommen im Grunde genommen alle für diesen Zweck im Stand der Technik bekannten und geeigneten Materialien in Betracht. In bevorzugten Ausgestaltungen weist der Isolierstoff bzw. der Feststoffisolator unter Normaldruck und bei einer Temperatur von 20 °C eine Durchschlagsfestigkeit von mindestens 1 Kilovolt pro Millimeter, mindestens 5 Kilovolt pro Millimeter, mindestens 10 Kilovolt pro Millimeter, mindestens 20 Kilovolt pro Millimeter oder mindestens 30 Kilovolt pro Millimeter auf. Alternativ oder zusätzlich kann der Isolierstoff bzw. der Feststoffisolator auch eine Durchschlagsfestigkeit von höchstens 80 Kilovolt pro Millimeter, höchstens 70 Kilovolt pro Millimeter oder höchstens 60 Kilovolt pro Millimeter aufweisen. Innerhalb dieser Bereiche lassen sich die gewünschte Isolationswirkung auf der einen Seite und der durch Tierkontakt induzierte elektrische Durchschlag auf der anderen Seite besonders effektiv zusammenführen. Geeignete Verfahren zur Bestimmung der Durchschlagsfestigkeit sind dem Fachmann z. B. aus der Normenreihe IEC 60243 von Januar 2013 bzw. DIN EN 60243 von Januar 2014 bekannt.

Vorzugsweise weist die Ummantelung mit dem Isolierstoff bzw. die Beschichtung mit dem Feststoffisolator unter Normaldruck und bei einer Temperatur von 20 °C eine Durchschlagsspannung von mindestens 5 Kilovolt, mindestens 6 Kilovolt oder mindestens 6,5 Kilovolt und/oder höchstens 12 Kilovolt, höchstens 10 Kilovolt oder höchstens 8 Kilovolt auf. Besonders bevorzugt liegt die Durchschlagsspannung im Bereich von 6 bis 8 Kilovolt, insbesondere bei etwa 7 Kilovolt.

In bevorzugten Ausgestaltungen ist der Isolierstoff bzw. der Feststoffisolator ausgewählt aus der Gruppe bestehend aus Polyvinylchlorid (PVC), Polyethylen (PE), Polyurethan (PU), Polyester (PES) einschließlich Polycarbonat (PC) und Polyethylenterephthalat (PET), Polyesterimid (PEI), Polyamidimid (PAI), Polytetrafluorethylen (PTFE) und beliebigen Kombinationen davon. Neben zweckdienlichen elektrischen Isolationseigenschaften weisen diese Isolierstoffe auch eine für den erfindungsgemäßen Zaunleiter besonders vorteilhafte mechanische Stabilität und Witterungsbeständigkeit auf. Ein besonders bevorzugter Feststoffisolator ist z. B. Polyurethan, welches für die Erfindung unter anderem besonders günstige Isoliereigenschaften bei gleichzeitig hoher Witterungs- bzw. UV-Beständigkeit vereint.

Als elektrisch leitender Leiterstrang kommt insbesondere ein Draht aus Metall bzw. einer Metalllegierung in Betracht, wobei sowohl ein- als auch mehrdrähtige Ausführungen des Leiterstrangs möglich sind. Vorzugsweise weist der Draht einen runden bzw. kreisförmigen Querschnitt auf, grundsätzlich sind aber auch andere Querschnitte möglich. Der Durchmesser des Drahtes kann beispielsweise in einem Bereich von 0,1 Millimeter bis 1,0 Millimeter liegen, wobei ein Durchmesser von etwa 0,3 Millimetern bevorzugt ist. Geeignete Leiterstränge sind beispielsweise Drähte aus Eisen, Stahl, Edelstahl, d. h. nichtrostender Stahl bzw. "Nirostahl", Aluminium und/oder Kupfer sowie Legierungen mit einem oder mehreren dieser Metalle. Vorzugsweise enthält der elektrisch leitende Leiterstrang Kupfer und/oder eine Kupferlegierung. Hier wirkt sich die isolierende Ummantelung des Leiterstrang zusätzlich vorteilhaft aus, indem beispielsweise die in der Regel gegenüber mechanischen Einwirkungen nicht besonders widerstandsfähigen und zudem korrosionsempfindlichen Kupferdrähte eine verbesserte Zugfestigkeit und verbesserte Korrosionsbeständigkeit erhalten. Aufgrund dieser vorteilhaften Effekte ist es möglich, in dem erfindungsgemäßen Zaunleiter auch Kupferleiter, insbesondere in geringen Durchmessern, einzusetzen, welche durch ihren geringen Widerstand eine zuverlässige Hütewirkung des Zaunleiters auch über sehr lange Strecken gewährleisten, ohne dass hierfür die Leistung der Hochspannungsquelle gesteigert werden muss. Selbstverständlich bewirkt die Ummantelung auch eine Verbesserung der Bruchlast und Korrosionsbeständigkeit bei den anderen der vorgenannten Leitermaterialien.

Die besonderen elektrischen und mechanischen Eigenschaften des isolierten Leiterstrangs tragen entscheidend dazu bei, dass der erfindungsgemäße Zaunleiter auch über sehr lange Strecken eine wirksame Hütefunktion entfalten kann. Insbesondere kann die Länge des Zaunleiters mindestens 1000 Meter, mindestens 2000 Meter, mindestens 4000 Meter, mindestens 6000 Meter, mindestens 8000 Meter oder mehr betragen.

Die Ausführung des elektrisch nichtleitenden Trägerstrangs ist nicht sonderlich beschränkt, sodass als Trägerstrang prinzipiell sämtliche dem Fachmann für diesen Zweck bekannten und geeigneten Materialien in Betracht kommen. Typischerweise wird der Trägerstrang durch eine oder mehrere nichtleitende Kunststofffasern gebildet. Als besonders zweckdienlich haben sich aufgrund ihrer Robustheit z. B. Mono- und/oder Multifilamente aus Polyamiden (PA) wie Nylon, Polyethylen (PE) und/oder Polypropylen (PP) erwiesen.

In bevorzugten Ausgestaltungen sind dabei mehrere sich in der Längsrichtung des elektrischen Zaunleiter erstreckende elektrisch nichtleitende Trägerstränge und mindestens zwei, mindestens drei, mindestens vier, mindestens fünf oder mehr sich in der Längsrichtung des elektrischen Zaunleiter erstreckende elektrisch leitende Leiterstränge miteinander verdrillt, verseilt, umwickelt, verstrickt, verflochten und/oder verwoben oder in sonstiger Weise miteinander verbunden. Auf diese Weise wird eine hohe Haltbarkeit und Flexibilität des Zaunleiters erreicht, während gleichzeitig durch die Leiterbündelung für eine effektive Hütewirkung bei Tierberührung gesorgt ist. Hierbei weisen die elektrisch leitenden Leiterstränge vorzugsweise jeweils unabhängig voneinander jeder entlang der Längsrichtung des elektrischen Zaunleiter zumindest abschnittsweise die Ummantelung mit dem Isolierstoff auf. Dies ermöglicht eine vielseitige und flexible Ausgestaltung des erfindungsgemäßen Zaunleiters z. B. in Form einer Weidezaunlitze oder eines Weidezaunseils mit verflochtenen, verdrillten und/oder umwickelten Träger- und Leitersträngen oder auch in Form eines Weidezaunbands, bei dem die Leiterstränge in ein Geflecht aus Trägersträngen eingewoben sind.

Ein entsprechendes Verfahren zur Herstellung eines elektrischen Zaunleiters gemäß vorgehender Beschreibung umfasst daher zumindest die folgenden Schritte: A) Bereitstellen mindestens eines elektrisch nichtleitenden Trägerstrangs; B) Bereitstellen mindestens eines elektrisch leitenden Leiterstrangs und C) Verbinden des elektrisch nichtleitenden Trägerstrangs mit dem elektrisch leitenden Leiterstrang z. B. durch Verdrillen bzw. Verseilen, Verflechten, Umwickeln, Verweben, Verstricken oder in sonstiger geeigneter Weise, um den elektrischen Zaunleiter auszubilden.

Mit Vorzug wird zur Herstellung des elektrischen Zaunleiters ein mit einem Feststoffisolator ummantelter bzw. beschichteter elektrisch leitender Leiterstrang wie z. B. ein Lackdraht und insbesondere ein Kupferlackdraht verwendet bzw. in Verfahrensschritt B) bereitgestellt. Dadurch ist es möglich, dass der erfindungsgemäße Zaunleiter in Verfahrensschritt C) in konventioneller Weise bzw. mit herkömmlichen technischen Mitteln ausgebildet werden kann und ohne, dass im Vergleich zur Herstellung herkömmlicher Zaunleiter zusätzliche Verfahrensschritte erforderlich sind. Auf diese Weise lassen sich erfindungsgemäße Zaunleiter besonders einfach und wirtschaftlich herstellen.

Für die Herstellung eines als Litze ausgebildeten Zaunleiters ist zum Beispiel vorgesehen, dass in Verfahrensschritt A) zunächst einige, vorzugsweise monofile, Trägerstränge bereitgestellt und in einem weiteren Verfahrensschritt A') zu einem Trägergarn verseilt werden. Nach ein- oder mehrfacher Wiederholung der Schritte A) und A') können anschließend in einem Verfahrensschritt A") mehrere dieser Trägergarne zu einem Trägerseil verseilt werden, welches auf diese Weise die Grundstruktur des litzenförmigen Zaunleiters bildet. Selbstverständlich ist es auch möglich, dass in Verfahrensschritt A) der Trägerstrang bereits in Form eines Trägergarns bzw. Trägerseils bereitgestellt wird. In Verfahrensschritt C) wird das Trägerseil dann mit einem oder mehreren elektrischen Leitersträngen zur Litze bzw. zum litzenförmigen Zaunleiter verseilt. Vorzugsweise wird zwischen den verschiedenen Verseilungen in den Verfahrensschritten A'), A") und C) ein- oder mehrfach zwischen linksgängiger und rechtsgängiger Windungs- bzw. Schlagrichtung gewechselt. Auf diese Weise wird eine besonders hohe Reißfestigkeit des erfindungsgemäßen Zaunleiters erreicht.

Die Erfindung betrifft weiterhin eine Elektrozaunvorrichtung, wobei es sich insbesondere um einen elektrischen Weide- bzw. Gehegezaun handeln kann. Die Elektrozaunvorrichtung umfasst zwei oder auch mehrere Pfosten bzw. Pfähle, Stäbe oder dergleichen, zwischen denen sich mindestens ein erfindungsgemäßer elektrischer Zaunleiter gemäß der vorgehenden Beschreibung erstreckt. Eine Hochspannungseinrichtung ist mit dem elektrischen Zaunleiter elektrisch leitend verbunden bzw. elektrisch leitend verbindbar und dazu eingerichtet, den elektrischen Zaunleiter mit impulsförmiger elektrischer Hochspannung zu beaufschlagen. Eine geeignete Hochspannungseinrichtung kann z. B. ein transportables Akku- oder Batteriegerät mit einer entsprechenden Hochspannungsleistung sein, eine Batterie oder auch ein Netzgerät, welches mit einer fest installierten Stromquelle verbunden ist.

Selbstverständlich können auch mehrere erfindungsgemäße elektrischer Zaunleiter vorhanden sein, die gegebenenfalls untereinander elektrisch leitend verbunden bzw. parallel geschaltet sind. Die Elektrozaunvorrichtung kann dabei für einen unipolaren Betrieb ausgelegt sein, d. h. alle elektrischen Zaunleiter sind mit dem Pluspol der Hochspannungseinrichtung verbunden. Es ist aber auch möglich, dass die Elektrozaunvorrichtung für einen bipolaren Betrieb eingerichtet ist, wobei die elektrischen Zaunleiter alternierend mit dem Pluspol oder dem Minuspol der Hochspannungseinrichtung verbunden sind.

Aufgrund der bereits oben dargelegten Vorteile des erfindungsgemäßen Zaunleiters zeichnet sich die vorgeschlagene Elektrozaunvorrichtung insbesondere dadurch aus, dass Tiere bei Berührung des Zauns in zuverlässiger Weise einen abschreckenden Stromschlag erhalten, wohingegen ein unerwünschter Spannungsablauf bei Berührung des Zauns durch Gras oder Blätter vermieden wird. Diese "automatische" Differenzierung zwischen einem Tier- und einem Pflanzenkontakt und die sich daraus ergebende Unempfindlichkeit des Elektrozauns gegenüber Pflanzenbewuchs kann den Strombedarf der erfindungsgemäßen Vorrichtung im Vergleich zu herkömmlichen Elektrozäunen erheblich senken. Gleichzeitig können regelmäßige Kontroll- und Beseitigungsmaßnahmen, die verhindern sollen, dass nachwachsendes Gras oder Gebüsch die Spannung stört, und der damit verbundene Zeit- und Kostenaufwand deutlich reduziert werden oder sogar gänzlich entfallen.

In bevorzugten Ausführungen weist die Ummantelung des elektrischen Zaunleiters eine elektrische Durchschlagsspannung auf, welche kleiner als die von der Hochspannungseinrichtung beaufschlagte elektrische Hochspannung ist. Dies ist aus fachmännischer Sicht überraschend, weil man nach herrschender Lehrmeinung üblicherweise bestrebt ist, die Durchschlagsfestigkeit bzw. Durchschlagsspannung einer Isolierung von elektrischen Leitern wesentlich größer zu bemessen als die beaufschlagte Betriebsspannung, um einen elektrischen Durchschlag zu verhindern. Erfindungsgemäß ist jedoch der gegenteilige Effekt erwünscht, indem die Durchschlagsspannung vorzugsweise geringer sein sollte als die beaufschlagte Betriebsspannung, um eine vorteilhafte Hütewirkung der Elektrozaunvorrichtung zu erreichen. Insbesondere kann die Durchschlagsspannung mindestens 5% kleiner oder mindestens 10% kleiner und/oder höchstens 30% kleiner oder höchstens 20% kleiner als die von der Hochspannungseinrichtung beaufschlagte elektrische Hochspannung sein. Der Erfinder konnte feststellen, dass diese Parameter in Zusammenwirkung mit den unterschiedlichen Widerständen eines Tierkörpers und eines pflanzlichen Gebildes im Hinblick auf die Durchschlagsentwicklung zu einer besonders scharfen Differenzierung zwischen Tier- und Pflanzenkontakt mit dem Elektrozaun führen. Auf diese Weise lassen sich eine zuverlässige Hütewirkung einerseits und eine hohe Resistenz gegenüber Pflanzenbewuchs andererseits besonders vorteilhaft vereinen. Geeignete Verfahren zur Bestimmung der Durchschlagspannung sind dem Fachmann wiederum aus der Normenreihe IEC 60243 von 2013 oder DIN EN 60243 von 2014 geläufig.

Gemäß einer weiteren bevorzugten Ausgestaltung ist der erfindungsgemäße elektrische Zaunleiter in der Elektrozaunvorrichtung in einem Abstand von mindestens 150 Millimetern oder mindestens 200 Millimetern, vorzugsweise im Wesentlichen horizontal verlaufend, über einem pflanzenbewachsenen Boden angeordnet. Der Erfinder hat festgestellt, dass der typische elektrische Widerstand von Pflanzen in diesem Abstand über dem Erdboden in der Regel eine Höhe erreicht hat, welche eine besonders zuverlässige Abgrenzung einer Zaunberührung durch ein Tier von einer Zaunberührung durch ein pflanzliches Gebilde ermöglicht.

Ein geeignetes Verfahren zum Betrieb einer erfindungsgemäßen Elektrozaunvorrichtung gemäß vorgehender Beschreibung umfasst zumindest die folgenden Schritte: a) Bereitstellen der Elektrozaunvorrichtung und b) Inbetriebnehmen der Hochspannungseinrichtung, sodass der elektrische Zaunleiter mit impulsförmiger elektrischer Hochspannung beaufschlagt wird. Hierbei weist die Ummantelung des elektrischen Zaunleiters vorzugsweise eine elektrische Durchschlagsspannung auf, welche kleiner ist, insbesondere mindestens 5% oder mindestens 10% kleiner und/oder höchstens 30% kleiner, als die elektrische Hochspannung, mit welcher der elektrische Zaunleiter in Verfahrensschritt b) durch die Hochspannungseinrichtung beaufschlagt wird. Wie bereits oben dargelegt wurde, wird unter Anwendung dieser Parameter eine zuverlässige Differenzierung zwischen einem Tier- und einem Pflanzenkontakt mit dem Elektrozaun und eine dementsprechend effektive Hütewirkung bei gleichzeitig hoher Bewuchsresistenz erreicht.

Bevorzugte und vorteilhafte Ausgestaltungen des Verfahrens zur Herstellung des elektrischen Zaunleiters, der Elektrozaunvorrichtung und des Verfahrens zum Betrieb der Elektrozaunvorrichtung entsprechen im Übrigen, soweit anwendbar, denen des vorgehend beschriebenen elektrischen Zaunleiters. Merkmale, die weiter oben und im Folgenden für den elektrischen Zaunleiter offenbart sind, können sich daher auch auf das Verfahren zur Herstellung des elektrischen Zaunleiters, die Elektrozaunvorrichtung und das Verfahren zum Betrieb der Elektrozaunvorrichtung beziehen und umgekehrt.

### Kurze Beschreibung der Figuren

Die Erfindung wird nachfolgend anhand der beigefügten Figuren beispielhaft näher erläutert. Es zeigen:
- Fig. 1: eine schematische Schnittdarstellung eines erfindungsgemäßen elektrischen Zaunleiters;
- Fig. 2: eine schematische Schnittdarstellung durch einen elektrisch leitenden Leiterstrang des erfindungsgemäßen Zaunleiters aus Fig. 1;
- Fig.3: eine schematische Darstellung einer erfindungsgemäßen Elektrozaunvorrichtung in unipolarer Ausführung;
- Fig. 4: ein Ersatzschaltbild zur vereinfachten Beschreibung des elektrischen Verhaltens einer erfindungsgemäßen Elektrozaunvorrichtung;
- Fig. 5: eine schematische Darstellung eines weiteren erfindungsgemäßen elektrischen Zaunleiters;
- Fig. 6: eine schematische Darstellung einer erfindungsgemäßen Elektrozaunvorrichtung in bipolarer Ausführung.

### Detaillierte Beschreibung von Ausführungsbeispielen

Gleiche Bezugszeichen in den Figuren deuten auf gleiche oder analoge Elemente hin. Aus Gründen der Übersichtlichkeit sind bei wiederkehrenden Elementen gegebenenfalls nicht alle dieser Elemente mit einem Bezugszeichen versehen.

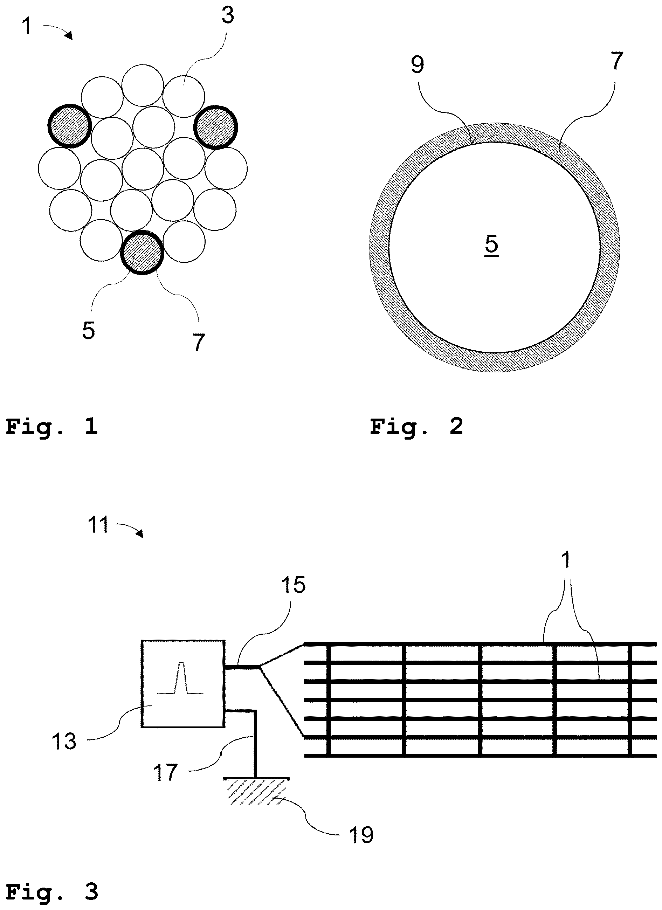

Fig. 1 zeigt anhand einer schematischen Schnittdarstellung den Aufbau eines exemplarischen erfindungsgemäßen elektrischen Zaunleiters 1. Der Zaunleiter 1 besteht aus einem im Wesentlichen runden Geflecht mit einem Bündel von mehreren nichtleitenden Trägersträngen 3 aus z. B. PE- oder PP-Monofilamenten. Zwischen den im Bündel außenliegenden Trägersträngen 3 sind insgesamt drei elektrisch leitende Leiterstränge 5 mit einer Ummantelung 7 aus Isolierstoff randseitig gleichmäßig verteilt, sodass eine Berührung von außen möglich ist. Die Trägerstränge 3 und die ummantelten Leiterstränge 5 sind zu einer Litze verdrillt und bilden auf diese Weise den Zaunleiter 1 aus.

Der Aufbau der ummantelten Leiterstränge 5 ist in Fig. 2 anhand einer weiteren schematischen Schnittdarstellung gezeigt. Als Leiterstrang 5 dient ein Kupferdraht von z. B. 0,3 Millimeter Durchmesser. Die Ummantelung 7 bildet eine Lackschicht aus Polyurethan, mit welcher die Außenoberfläche 9 des Kupferdrahts überzogen ist. Die Dicke der Lackschicht kann z. B. 12 Mikrometer betragen. Als geeignet hat sich z. B. ein Kupferlackdraht Typ V 180 Grad 1 erwiesen (Elektrisola, Reichshof-Eckenhagen, Deutschland). Auf diese Weise kann ein elektrischer Durchschlag ab einer Spannung von etwa 6000 Volt bis etwa 7000 Volt eintreten, wobei die genaue Durchschlagsspannung im Bedarfsfall vom Fachmann ohne Weiteres ermittelt werden kann.

Fig. 3 zeigt schließlich eine erfindungsgemäße Elektrozaunvorrichtung 11 mit einem unipolaren Weidezaunnetz aus mehreren elektrischen Zaunleitern 1, welche horizontal zwischen Pfosten (hier nicht dargestellt) aufgespannt und in senkrechter Richtung elektrisch leitend miteinander verbunden sind. Es versteht sich, dass an solchen elektrischen Anschlussstellen die Ummantelung 9 von den elektrischen Leitersträngen entfernt bzw. zu entfernen ist. Eine Hochspannungseinheit 13, z. B. ein mit einer Stromquelle verbundener Hochspannungsgenerator, ist über den Pluspol 15 mit dem Weidezaunnetz elektrisch leitend verbunden und liefert im zeitlichen Abstand von z. B. einer Sekunde Impulse von 8000 Volt. Der Minuspol 17 des Hochspannungsgenerators 13 ist beispielsweise über einen Erdspieß mit dem Boden 19 verbunden. Üblicherweise sind entlang des Weidezaunnetzes z. B. im Abstand von jeweils drei bis zehn Metern zueinander mehrere solcher ca. ein bis zwei Meter langen Erdspieße bzw. Erdungsstäbe in den Boden eingeschlagen.

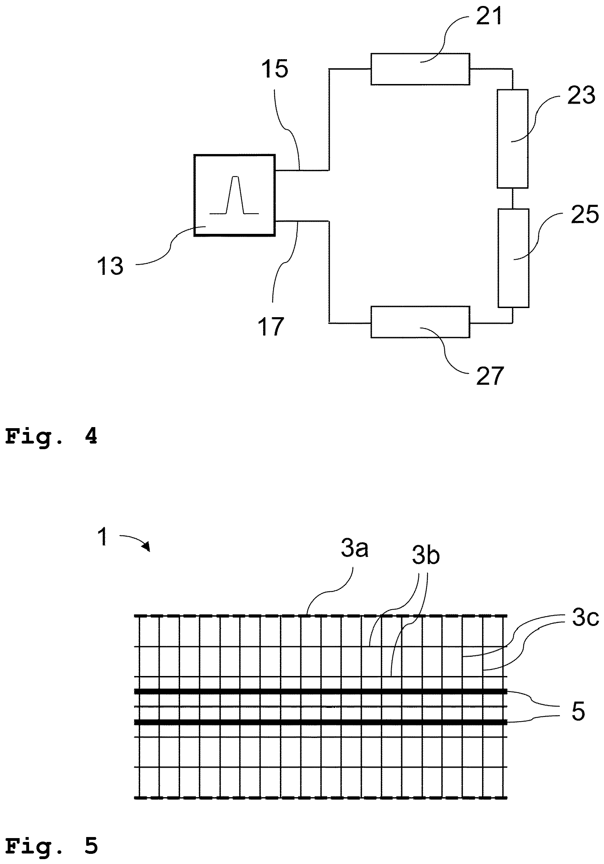

Fig. 4 zeigt ein Ersatzschaltbild zur vereinfachten Erläuterung des elektrischen Verhaltens der Elektrozaunvorrichtung 11, ohne dass eine Beschränkung anhand der nachfolgenden theoretischen Überlegungen erfolgen soll. Der Hochspannungsgenerator 13 liefert über den Pluspol 15 impulsförmige Hochspannung an den elektrisch leitenden Leiterstrang 5, dessen elektrischer Widerstand hier mit 21 dargestellt ist. Der elektrische Widerstand der Ummantelung 9 mit Isolierstoff ist mit 23 und der Vor- bzw. Lastwiderstand, gegeben durch die Berührung der Ummantelung 9 durch eine Pflanze oder einen Tierkörper gegen Erdpotential, ist mit 25 gekennzeichnet. Schließlich ist noch der Übergangswiderstand von diesem Erdungspunkt zum Minuspol 17 des Weidezaungenerators 11 zu berücksichtigen, der hier mit 27 bezeichnet ist.

Im Ruhezustand, d. h. wenn keine Tier- oder Pflanzenberührung des Elektrozauns 11 vorliegt, ist der Vor- bzw. Lastwiderstand 25 als sehr hoch bzw. gegen unendlich gehend anzunehmen. Der Hochspannungsstromkreis ist demzufolge offen und es fließt kein messbarer Strom.

Bei einer Berührung des Elektrozauns 11 durch eine Pflanze sinkt der Lastwiderstand 25. Umfangreiche Testmessungen des Erfinders an verschiedenen Pflanzen haben z. B. in einer Höhe von 200 Millimetern über dem Erdboden 19 einen Gleichstromwiderstand von mehr als 200 Kiloohm ergeben. Da unter den gegebenen Umständen aber nach Erkenntnis des Erfinders erst bei einem Lastwiderstand 25 von weniger als 10 Kiloohm der erforderliche Ionisationsstrom durch die Ummantelung 9 fließen kann, kommt es zu keinem elektrischen Durchschlag. Die isolierende Wirkung der Ummantelung 9 bleibt erhalten und es fließt kein Strom, sodass die Pflanzenberührung keinen wesentlichen Einfluss auf das System ausübt.

Bei der Berührung durch ein Tier liegt der Vor- bzw. Lastwiderstand 25 in einem Bereich von etwa 250 Ohm bis etwa 700 Ohm (z. B. Schwein, Wolf, Rind oder Pferd). Dieser geringe Vor- bzw. Lastwiderstand 25 führt dazu, dass ein ausreichender Ionisierungsstrom durch die isolierende Ummantelung 7 fließen kann, um schlagartig eine Vielzahl freier Ladungsträger zu erzeugen. Bei ausreichendem Potentialunterschied kommt es schließlich zur Ausbildung einer Ladungsträgerlawine (Stoßionisation). Schließlich führt dieser Prozess zu einem so großen Potentialunterschied, dass die Durchschlagsspannung erreicht wird. Der Widerstand 23 der Ummantelung 7 verringert sich dadurch drastisch und es fließt im nunmehr geschlossenen Stromkreis kurzzeitig ein hoher Strom. Dieser Hochspannungsimpuls wird an das Tier weitergeleitet, welches einen elektrischen Schlag erhält. Überraschenderweise haben die Untersuchungen des Erfinders dabei gezeigt, dass der elektrische Durchschlag durch die Ummantelung zu keinem beeinträchtigenden Energieverlust des Schockimpulses führt. Mit anderen Worten wird die gleiche Hütewirkung erzielt wie bei einem Schockimpuls, der in herkömmlicher Weise durch direkten elektrischen Kontakt eines Tieres mit dem elektrischen Leiter eines konventionellen elektrischen Zaunleiters erzeugt wird.

Fig. 5 zeigt eine alternative Ausgestaltungsmöglichkeit des erfindungsgemäßen elektrischen Zaunleiters 1 als Weidezaunband. In dieser Ausführung sind je zwei Trägerstränge 3 als verstärkte Randfäden 3a ausgebildet. Zwischen den Randfäden 3a sind mehrere, parallel dazu verlaufende Trägerstränge 3 in Form von Kettfäden 3b gespannt. Weitere, als Schussfäden 3c ausgebildete Trägerstränge 3 sind mit den Randfäden 3a und Kettfäden 3b verwoben und formen auf diese Weise ein Gewebe bzw. Gewebeband. Randfäden 3a, Kettfäden 3b und Schussfäden 3c können z. B. PE-Monofile in den jeweils geeigneten Durchmessern sein. Innerhalb des Gewebebandes erstrecken sich etwa mittig verlaufend zwei ummantelte elektrische Leiterstränge 5, z. B. Kupferdrähte mit 0,3 Millimeter Durchmesser und einem Lacküberzug aus Polyurethan (Elektrisola, Reichshof-Eckenhagen, Deutschland), welche mithilfe der Schussfäden 3c in das Gewebe eingewirkt sind. Selbstverständlich kann auch nur ein ummantelter elektrischer Leiterstrang 5 vorhanden sein oder es können mehr als zwei ummantelte elektrische Leiterstränge 5 in das Weidezaunband eingewirkt sein.

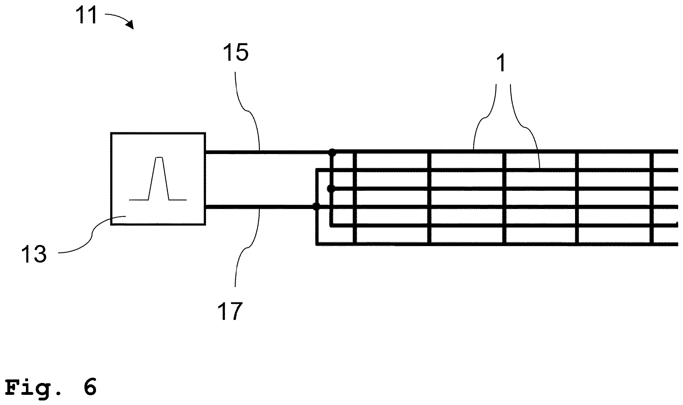

In Fig. 6 ist eine weitere erfindungsgemäße Elektrozaunvorrichtung 11 dargestellt, welche als bipolares Weidezaunnetz ausgebildet ist. Im Unterschied zum unipolaren Weidezaunnetz aus Fig. 3 sind hierbei die elektrischen Zaunleiter 1 in alternierender Folge positiv und negativ belegt, d. h. jeweils abwechselnd mit dem Pluspol 15 oder dem Minuspol 17 der Hochspannungseinheit 13 verbunden. Die positiven und negativen Zaunleiter 1 sind hierbei parallel zueinander geschaltet. Der Vorteil einer bipolaren Ausführung der erfindungsgemäßen Elektrozaunvorrichtung 11 liegt unter anderem darin, dass die Rückleitung der Hochspannungsimpulse über die negativen Zaunleiter 1 erfolgt. Dies ist mit einem wesentlich geringeren Widerstand verbunden als die Rückleitung über die Erde, wie es beim unipolaren Weidezaunnetz der Fall ist. Zum einen lässt sich dadurch die beaufschlagte Impulsenergie effizienter bzw. weitgehend verlustfrei auf ein den Elektrozaun berührendes Tier übertragen und die Vorrichtung somit wirtschaftlicher betreiben. Zum anderen wird auch die Zuverlässigkeit der Vorrichtung im Betrieb verbessert, da der Widerstand der Rückleitung von äußeren Bedingungen weitgehend unbeeinflusst bleibt. Im Gegensatz hierzu kann der Rückleitungswiderstand bei einem unipolaren Weidezaunnetz starken Schwankungen unterliegen und insbesondere bei Austrocknung des Bodens stark ansteigen, sodass der Betrieb der Elektrozaunvorrichtung beeinträchtigt sein kann. Schließlich wird auch die Installation der Elektrozaunvorrichtung erheblich vereinfacht, da bei der bipolaren Ausführung gegenüber der unipolaren Ausführung keine Erdungsstäbe erforderlich sind.

Die Erfindung ist nicht durch die Beschreibung anhand der Ausführungsbeispiele auf diese beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination von Merkmalen selbst nicht explizit in den Patentansprüchen oder Ausführungsbeispielen angegeben ist.

### Bezugszeichenliste

- 1: elektrischer Zaunleiter
- 3: elektrisch nichtleitender Trägerstrang
- 3a: Randfaden
- 3b: Kettfaden
- 3c: Schussfaden
- 5: elektrisch leitender Leiterstrang
- 7: Ummantelung
- 9: Außenoberfläche des elektrisch leitenden Leiterstrangs
- 11: Elektrozaunvorrichtung
- 13: Hochspannungseinheit
- 15: Pluspol
- 17: Minuspol
- 19: Boden
- 21: elektrischer Widerstand des Leiterstrangs 5
- 23: elektrischer Widerstand der Ummantelung 7
- 25: Vor- bzw. Lastwiderstand einer Pflanze oder eines Tierkörpers gegen Erdpotenzial
- 27: Übergangswiderstand vom Erdungspunkt zum Minuspol 17

## Patentansprüche

1. Ein elektrischer Zaunleiter (1), insbesondere ein elektrischer Weide- oder Gehegezaunleiter, mit
mindestens einem sich in einer Längsrichtung des elektrischen Zaunleiters (1) erstreckenden elektrisch nichtleitenden Trägerstrang (3, 3a, 3b, 3c) und
mindestens einem sich in der Längsrichtung des elektrischen Zaunleiters (1) erstreckenden elektrisch leitenden Leiterstrang (5), welcher mit dem elektrisch nichtleitenden Trägerstrang (3, 3a, 3b, 3c) verbunden ist,
**dadurch gekennzeichnet, dass** der elektrisch leitende Leiterstrang (5) entlang der Längsrichtung des elektrischen Zaunleiters (1) zumindest abschnittsweise eine Ummantelung (7) mit einem Isolierstoff aufweist.

2. Der elektrische Zaunleiter (1) nach Anspruch 1, **dadurch gekennzeichnet, dass** entlang der Längsrichtung des elektrischen Zaunleiters (1) mindestens 50%, mindestens 60%, mindestens 70%, mindestens 80%, mindestens 90% oder mindestens 95% des elektrisch leitenden Leiterstrangs (5) die Ummantelung (7) mit dem Isolierstoff aufweisen.

3. Der elektrische Zaunleiter (1) nach einem der Ansprüche 1 oder 2, **dadurch gekennzeichnet, dass** die Ummantelung (7) mit dem Isolierstoff als eine auf einer Außenoberfläche (9) des elektrisch leitenden Leiterstrangs (5) angeordnete Beschichtung mit einem Feststoffisolator ausgebildet ist.

4. Der elektrische Zaunleiter (1) nach einem der Ansprüche 1 bis 3, **dadurch gekennzeichnet, dass** die Ummantelung (7) bzw. die Beschichtung eine Dicke von mindestens 0,005 Millimetern und/oder höchstens 0,1 Millimetern aufweist.

5. Der elektrische Zaunleiter (1) nach einem der Ansprüche 1 bis 4, **dadurch gekennzeichnet, dass** der Isolierstoff bzw. der Feststoffisolator ausgewählt ist aus der Gruppe bestehend aus Polyvinylchlorid (PVC), Polyethylen (PE), Polyurethan (PU), Polyester (PES) einschließlich Polycarbonat (PC) und Polyethylenterephthalat (PET), Polyesterimid (PEI), Polyamidimid (PAI), Polytetrafluorethylen (PTFE) und beliebigen Kombinationen davon.

6. Der elektrische Zaunleiter (1) nach einem der Ansprüche 1 bis 5, **dadurch gekennzeichnet, dass** der elektrisch leitende Leiterstrang (5) Kupfer und/oder eine Kupferlegierung enthält bzw. daraus besteht.

7. Der elektrische Zaunleiter (1) nach einem der Ansprüche 1 bis 6, **dadurch gekennzeichnet, dass** der Isolierstoff bzw. der Feststoffisolator eine Durchschlagsfestigkeit von größer gleich 1 Kilovolt pro Millimeter und/oder kleiner gleich 60 Kilovolt pro Millimeter aufweist.

8. Der elektrische Zaunleiter (1) nach einem der Ansprüche 1 bis 7, **dadurch gekennzeichnet, dass** mehrere sich in der Längsrichtung des elektrischen Zaunleiters (1) erstreckende elektrisch nichtleitende Trägerstränge (3, 3a, 3b, 3c) und mindestens zwei, mindestens drei, mindestens vier, mindestens fünf oder mehr sich in der Längsrichtung des elektrischen Zaunleiters (1) erstreckende elektrisch leitende Leiterstränge (5) miteinander verdrillt, verseilt, umwickelt, verstrickt, verflochten und/oder verwoben sind, wobei die elektrisch leitenden Leiterstränge (5) jeweils unabhängig voneinander jeder entlang der Längsrichtung des elektrischen Zaunleiters (1) zumindest abschnittsweise die Ummantelung (7) mit dem Isolierstoff aufweisen.

9. Ein Verfahren zur Herstellung eines elektrischen Zaunleiters (1) nach einem der Ansprüche 1 bis 8, mit den Schritten
A) Bereitstellen mindestens eines elektrisch nichtleitenden Trägerstrangs (3, 3a, 3b, 3c),
B) Bereitstellen mindestens eines elektrisch leitenden Leiterstrangs (5), welcher zumindest abschnittsweise eine Ummantelung (7) mit einem Isolierstoff aufweist,
C) Verbinden des elektrisch nichtleitenden Trägerstrangs (3, 3a, 3b, 3c) mit dem elektrisch leitenden Leiterstrang (5) insbesondere durch Verdrillen bzw. Verseilen, Verflechten, Umwickeln, Verstricken und/oder Verweben, um den elektrischen Zaunleiter (1) auszubilden.

10. Eine Elektrozaunvorrichtung (11), insbesondere ein elektrischer Weide- oder Gehegezaun, mit
zwei oder mehreren Pfosten bzw. Pfählen, zwischen denen sich mindestens ein elektrischen Zaunleiter (1) nach einem der Ansprüche 1 bis 8 erstreckt, und
eine mit dem elektrischen Zaunleiter (1) elektrisch leitend verbundene bzw. elektrisch leitend verbindbare Hochspannungseinheit (13), welche dazu eingerichtet ist, den elektrischen Zaunleiter (1) mit impulsförmiger elektrischer Hochspannung zu beaufschlagen.

11. Die Elektrozaunvorrichtung (11) nach Anspruch 10, **dadurch gekennzeichnet, dass** die Ummantelung (7) des elektrischen Zaunleiters eine elektrische Durchschlagsspannung aufweist, welche kleiner, insbesondere mindestens 5% oder mindestens 10% kleiner und/oder höchstens 30% kleiner, als die von der Hochspannungseinheit (13) beaufschlagte elektrische Hochspannung ist.

12. Die Elektrozaunvorrichtung (11) nach einem der Ansprüche 10 oder 11, **dadurch gekennzeichnet, dass** der elektrische Zaunleiter (1) in einem Abstand von mindestens 200 Millimetern über einem pflanzenbewachsenen Boden (19) angeordnet ist.

13. Ein Verfahren zum Betrieb einer Elektrozaunvorrichtung (11) nach einem der Ansprüche 10 bis 12, mit den Schritten
a) Bereitstellen der Elektrozaunvorrichtung (11),
b) Inbetriebnehmen der Hochspannungseinheit (13), sodass der elektrische Zaunleiter (1) mit impulsförmiger elektrischer Hochspannung beaufschlagt wird.

14. Das Verfahren nach Anspruch 13, **dadurch gekennzeichnet, dass** die Ummantelung (7) des elektrischen Zaunleiters (1) eine elektrische Durchschlagsspannung aufweist, welche kleiner, insbesondere mindestens 5% oder mindestens 10% kleiner und/oder höchstens 30% kleiner ist als die elektrische Hochspannung, mit welcher der elektrische Zaunleiter (1) in Schritt b) durch die Hochspannungseinheit (13) beaufschlagt wird.

15. Eine Verwendung eines mit einem Isolierstoff ummantelten bzw. beschichteten elektrisch leitenden Leiterstrangs (5), insbesondere eines Lackdrahts, zur Herstellung eines elektrischen Zaunleiters (1), insbesondere eines elektrischen Weide- oder Gehegezaunleiters.
